# EUROPÄISCHE PATENTSCHRIFT

(11) **EP 4 010 974 B1**
(45) Veröffentlichungstag und Bekanntmachung des Hinweises auf die Patenterteilung: **20.12.2023**
(21) Anmeldenummer: 20746163.3
(22) Anmeldetag: 23.07.2020
(51) Int. Cl.: H02M 3/335, H02M 1/00

(54) **ANSTEUERVERFAHREN FÜR EINEN GLEICHSPANNUNGSWANDLER UND GLEICHSPANNUNGSWANDLER**
CONTROL METHOD FOR A DC/DC CONVERTER AND DC/DC CONVERTER
PROCEDE DE COMMANDE POUR UN CONVERTISSEUR CC/CC ET UN CONVERTISSEUR CC/CC

(30) Priorität: 09.08.2019 DE 102019211968
(43) Veröffentlichungstag der Anmeldung: 15.06.2022
(73) Patentinhaber: Robert Bosch GmbH, 70442 Stuttgart (DE)
(72) Erfinder: WINTER, Christian, 71638 Ludwigsburg (DE); CELLO, David, 70178 Stuttgart (DE); RIEDEL, Jan, 70372 Stuttgart (DE); KIENZLER, Christoph, 70839 Gerlingen (DE)
(86) Internationale Anmeldenummer: PCT/EP2020/070756
(87) Internationale Veröffentlichungsnummer: WO 2021/028181

(56) Entgegenhaltungen:
- EP-A1- 3 324 528
- CN-A- 103 929 065
- DE-A1-102016 220 358
- JP-A- 2018 133 964
- KR-A- 20160 141 638
- US-A1- 2014 334 189
- US-A1- 2015 214 847
- MUTHURAJ SHIVA S ET AL: "Triple Phase Shift Control of an LLL Tank Based Bidirectional Dual Active Bridge Converter", IEEE TRANSACTIONS ON POWER ELECTRONICS, INSTITUTE OF ELECTRICAL AND ELECTRONICS ENGINEERS, USA, Bd. 32, Nr. 10, 1. Oktober 2017 (2017-10-01), - 1. Oktober 2017 (2017-10-01), Seiten 8035-8053, XP011649002, ISSN: 0885-8993, DOI: 10.1109/TPEL.2016.2637506 [gefunden am 2017-05-10]

## Beschreibung

Die vorliegende Erfindung betrifft ein Verfahren zur Ansteuerung eines Gleichspannungswandlers, insbesondere eines Phase-Shifted-Full-Bridge-Gleichspannungswandlers. Ferner betrifft die vorliegende Erfindung einen Phase-Shifted-Full-Bridge-Gleichspannungswandler.

### Stand der Technik

Zur Konvertierung einer ersten Gleichspannung in eine zweite Gleichspannung mit anderer Spannungshöhe sind Gleichspannungswandler bekannt. Insbesondere umfasst die Gruppe der Gleichspannungswandler auch sogenannte Phase-Shifted-Full-Bridge-Gleichspannungswandler. Diese Gleichspannungswandler können unter bestimmten Rahmenbedingungen auch einen Leistungstransfer von der Sekundärseite auf die Primärseite realisieren, sofern auf der Sekundärseite auch aktive Schaltelemente eingesetzt werden. Beispielsweise können Gleichspannungswandler eingesetzt werden, um ein Hochvoltnetz eines Elektrofahrzeugs mit dem Niedervoltnetz des Fahrzeugs zu koppeln und elektrische Energie zwischen den beiden Bordnetzen eines solchen Elektrofahrzeugs zu übertragen.

Die Druckschrift DE 10 2016 200 662 A1 offenbart einen bidirektionalen Gleichspannungswandler zur Energieübertragung zwischen einem Hochvoltnetz und einem Niedervoltnetz eines Elektrofahrzeugs. Der Wandler umfasst mindestens einen Transformator zur galvanischen Trennung der beiden Bordnetze, elektronische Schalter zum Umpolen der Wicklungen des Transformators sowie eine Steuereinrichtung zum Steuern der Schalter. Insbesondere soll der Gleichspannungswandler ein Aufladen eines Zwischenkreiskondensators auf der Hochvoltseite ermöglichen. Aus den Druckschriften US 2015/214847 A1, EP 3 324 528 A1, DE 10 2016 220358 A1, JP 2018 133964 A, CN 103 929 065 A, KR 2016 0141638 A sind Gleichspannungswandler und dazugehörige Ansteuerverfahren bekannt.

### Offenbarung der Erfindung

Die vorliegende Erfindung offenbart ein Verfahren nach Anspruch 1 zur Ansteuerung eines Gleichspannungswandlers sowie einen Gleichspannungswandler nach Anspruch 4. Weitere Ausführungsformen sind Gegenstand der abhängigen Patentansprüche.

### Vorteile der Erfindung

Der vorliegenden Erfindung liegt die Erkenntnis zugrunde, dass Gleichspannungswandler, insbesondere sogenannte Phase-Shifted-Full-Bridge-Gleichspannungswandler unter bestimmten Randbedingungen auch zum Leistungstransfer von der Sekundärseite auf die Primärseite eingesetzt werden können, wenn auf der Sekundärseite aktive Schaltelemente eingesetzt werden.

Überschreitet die elektrische Gleichspannung auf der Primärseite das Produkt aus elektrischer Gleichspannung auf der Sekundärseite und Übersetzungsverhältnis des Transformators in dem Gleichspannungswandler, so kann der Leistungstransfer in Rückwärtsrichtung ohne zusätzliche Komponenten erreicht werden. Die Schalter auf der Primärseite werden dabei entweder zur passiven oder aktiven Gleichrichtung genutzt. Für ein weiches Einschalten der primärseitigen Schalter bei aktiver Ansteuerung können die primär- und sekundärseitigen Schaltelemente mit einem optimierten Schaltmuster geschaltet werden.

Durch die Einführung eines speziellen Schaltzustandes ermöglicht es die vorliegende Erfindung, einen hohen Leistungstransfer in Rückwärtsrichtung zu erzielen, wenn die elektrische Spannung auf der Primärseite die oben genannte Grenze überschreitet. Die Anforderungen an die Genauigkeit der Ansteuerung werden dabei für Transformatoren mit geringer Streuinduktivität verringert. Darüber hinaus werden die Gesamtverluste und insbesondere die Verluste in den sekundärseitigen Schaltern reduziert.

Es ist eine Idee der vorliegenden Erfindung, durch ein geeignetes Schaltmuster die Ansteuerung der sekundärseitigen Schaltelemente insbesondere bei hohen Lasten und kleinem Phasenversatz auf der Primärseite die Effektivwelle der Ströme im Transformator und in den primärseitigen Schaltern zu verringern. Hierbei verteilt sich der Strom in einem Teil der Periode auf beide sekundärseitige Schalter. Dadurch wird die Verlustleistung in den sekundärseitigen Schaltelementen verringert.

Gemäß einer Ausführungsform ist die elektrische Spannung an dem Primäranschluss des Gleichspannungswandlers größer als das Produkt aus der elektrischen Spannung am Sekundäranschluss des Gleichspannungswandlers multipliziert mit dem Übersetzungsverhältnis des Transformators. Das Übersetzungsverhältnis des Transformators ergibt sich hierbei insbesondere aus dem Quotienten der Wicklungsanzahl auf der Primärseite geteilt durch die Anzahl der Windungen auf der Sekundärseite.

Gemäß einer Ausführungsform umfasst das Verfahren die folgenden Schritte: In einem ersten Schritt wird der erste Anschluss der Sekundärseite des Transformators mit dem ersten Anschluss der Sekundärseite des Gleichspannungswandlers verbunden, der zweite Anschluss der Sekundärseite des Transformators ist mit dem zweiten Anschluss der Sekundärseite des Gleichspannungswandlers verbunden, der erste Anschluss der Primärseite des Transformators ist mit dem ersten Anschluss der Primärseite des Gleichspannungswandlers verbunden und der zweite Anschluss der Primärseite des Transformators ist mit dem zweiten Anschluss der Primärseite des Gleichspannungswandlers verbunden. Daraufhin wird in einem zweiten Schritt der erste Anschluss der Sekundärseite des Transformators, der zweite Anschluss der Sekundärseite des Transformators, der erste Anschluss der Sekundärseite des Gleichspannungswandlers und der zweite Anschluss der Sekundärseite des Gleichspannungswandlers miteinander verbunden. Daraufhin wird in einem dritten Schritt die Verbindung zwischen dem zweiten Anschluss der Primärseite des Transformators und dem zweiten Anschluss der Primärseite des Gleichspannungswandlers getrennt und der zweite Anschluss der Primärseite des Transformators mit dem ersten Anschluss der Primärseite des Gleichspannungswandlers verbunden. Daraufhin erfolgt in einem vierten Schritt das Trennen der Verbindung zwischen dem ersten Anschluss der Sekundärseite des Transformators und dem zweiten Anschluss der Sekundärseite des Transformators. Ferner wird in dem vierten Schritt die Verbindung zwischen dem ersten Anschluss der Sekundärseite des Gleichspannungswandlers und dem zweiten Anschluss der Sekundärseite des Gleichspannungswandlers getrennt. Weiterhin wird in dem vierten Schritt eine elektrische Verbindung zwischen dem ersten Anschluss der Sekundärseite des Gleichspannungswandlers und dem zweiten Anschluss der Sekundärseite des Transformators sowie dem zweiten Anschluss der Sekundärseite des Gleichspannungswandlers und dem ersten Anschluss der Sekundärseite des Transformators bereitgestellt.

Dabei entspricht insbesondere der Schaltzustand, wie er nach dem dritten Schritt eingestellt wird, dem besonderen Schaltzustand, wie er gemäß der vorliegenden Erfindung neu eingeführt wird.

Gemäß einer Ausführungsform umfasst das Verfahren weiterhin die folgenden Schritte: In einem fünften Schritt erfolgt ein Verbinden des zweiten Anschlusses der Sekundärseite des Transformators mit dem ersten Anschluss der Sekundärseite des Gleichspannungswandlers. Gleichzeitig erfolgt ein Verbinden des ersten Anschlusses der Sekundärseite des Transformators mit dem zweiten Anschluss der Sekundärseite des Gleichspannungswandlers. Ferner erfolgt ein Verbinden des zweiten Anschlusses der Primärseite des Transformators mit dem ersten Anschluss der Primärseite des Gleichspannungswandlers und ein Verbinden des ersten Anschlusses der Primärseite des Transformators mit dem zweiten Anschluss der Primärseite des Gleichspannungswandlers. Daraufhin kann in einem sechsten Schritt der erste Anschluss der Sekundärseite des Transformators, der zweite Anschluss der Sekundärseite des Transformators, der erste Anschluss der Sekundärseite des Gleichspannungswandlers und der zweite Anschluss der Sekundärseite des Gleichspannungswandlers miteinander verbunden werden. Daraufhin kann in einem siebten Schritt die Verbindung zwischen dem ersten Anschluss der Primärseite des Transformators und dem ersten Anschluss der Primärseite des Gleichspannungswandlers getrennt werden, und der zweite Anschluss der Primärseite des Transformators kann mit dem zweiten Anschluss der Primärseite des Gleichspannungswandlers verbunden werden. Schließlich erfolgt in einem achten Schritt das Trennen der Verbindung zwischen dem ersten Anschluss der Sekundärseite des Transformators und dem zweiten Anschluss der Sekundärseite des Transformators. Ferner wird in dem achten Schritt die Verbindung zwischen dem zweiten Anschluss der Sekundärseite des Gleichspannungswandlers und dem ersten Anschluss der Sekundärseite des Gleichspannungswandlers getrennt. Ferner erfolgt in dem achten Schritt ein Bereitstellen einer elektrischen Verbindung zwischen dem zweiten Anschluss der Sekundärseite des Gleichspannungswandlers und dem ersten Anschluss der Sekundärseite des Transformators sowie dem ersten Anschluss der Sekundärseite des Gleichspannungswandlers und dem zweiten Anschluss der Sekundärseite des Transformators.

Die Abfolge des fünften bis achten Schrittes der zuvor beschriebenen Ausführungsform entspricht dabei der Abfolge des ersten bis vierten Schrittes mit inverser Stromrichtung. Auf diese Weise erfolgt eine möglichst gleichmäßige Belastung der Schaltelemente in dem Gleichspannungswandler. Insbesondere entspricht auch der Schaltzustand, wie er nach dem Erreichen des siebten Schrittes eingestellt wird, ebenfalls dem besonderen erfindungsgemäßen Schaltzustand.

Zur Energieübertragung von der Sekundärseite des Gleichspannungswandlers zur Primärseite des Gleichspannungswandlers kann die zuvor beschriebene Abfolge von Schritten periodisch wiederholt werden.

Erfindungsgemäß ist zwischen einem Knotenpunkt, an dem das fünfte und das siebte Schaltelement elektrisch miteinander verbunden sind, und dem ersten Anschluss der Sekundärseite des Gleichspannungswandlers eine Serieninduktivität vorgesehen Gemäß einer weiteren Ausführungsform kann es sich bei dem Transformator des Gleichspannungswandlers um einen Transformator mit einer geringen Streuinduktivität handeln.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1:: eine schematische Darstellung eines Prinzipschaltbilds, wie es einem Gleichspannungswandler gemäß einer Ausführungsform zugrunde liegt;
- Figur 2:: ein Timing-Diagramm für eine Abfolge der Schaltzustände, wie es einem Verfahren zum Betrieb des Gleichspannungswandlers gemäß einer Ausführungsform zugrunde liegt;
- Figur 3:: ein Timing-Diagramm für die Schaltzustände in einem Gleichspannungswandler gemäß einer weiteren Ausführungsform; und
- Figur 4:: eine schematische Darstellung eines Ablaufdiagramms, wie es einem Verfahren zur Ansteuerung eines Gleichspannungswandlers gemäß einer Ausführungsform zugrunde liegt.

### Ausführungsformen der Erfindung

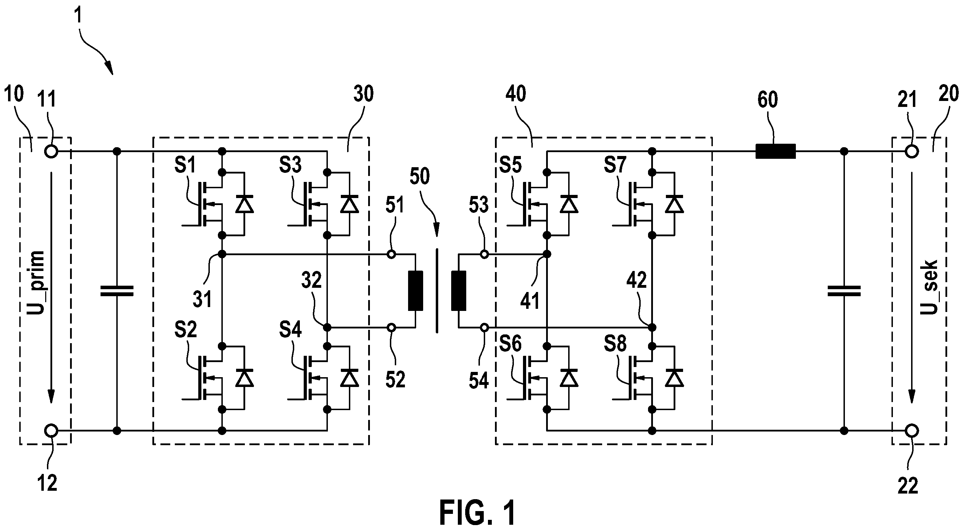

Figur 1 zeigt eine schematische Darstellung eines Prinzipschaltbilds, wie es einem Gleichspannungswandler 1, insbesondere einem Phase-Shifted-Full-Bridge-Gleichspannungswandler gemäß einer Ausführungsform zugrunde liegt. Der Gleichspannungswandler 1 umfasst auf der Primärseite ein Anschlusselement 10 mit einem ersten Primäranschluss 11 und einem zweiten Primäranschluss 12. Zwischen dem ersten Anschluss 11 und dem zweiten Anschluss 12 der Primärseite kann eine Gleichspannung U_prim anliegen. Analog umfasst ein Anschlusselement 20 auf der Sekundärseite einen ersten Sekundäranschluss 21 und einen zweiten Sekundäranschluss 22. Zwischen dem ersten Anschluss 21 und dem zweiten Anschluss 22 der Sekundärseite kann eine Gleichspannung U_sek anliegen. Beispielsweise kann der Gleichspannungswandler 1 auf der Primärseite mit einem Hochvoltnetz eines Elektrofahrzeugs gekoppelt werden, und die Sekundärseite des Gleichspannungswandlers 1 kann mit einem Niedervoltnetz eines Elektrofahrzeugs gekoppelt sein. Jedoch sind grundsätzlich auch beliebige andere Anwendungsmöglichkeiten für einen derartigen Gleichspannungswandler 1 möglich.

Weiterhin weist der Gleichspannungswandler 1 eine erste Vollbrücke 30, eine zweite Vollbrücke 40 sowie einen Transformator 50 auf. Der Transformator 50 ist auf der Primärseite mit der ersten Vollbrücke 30 verbunden und auf der Sekundärseite mit der zweiten Vollbrücke 40.

Die erste Vollbrücke 30 umfasst ein erstes Schaltelement S1, das zwischen dem ersten Primäranschluss 11 und einem ersten Knotenpunkt 31 angeordnet ist, ein zweites Schaltelement S2, das zwischen dem ersten Knotenpunkt 31 und dem zweiten Primäranschluss 12 angeordnet ist, ein drittes Schaltelement S3, das zwischen dem ersten Primäranschluss 11 und einem zweiten Knotenpunkt 32 angeordnet ist, und ein viertes Schaltelement S4, das zwischen dem zweiten Knotenpunkt 32 und dem zweiten Primäranschluss 12 angeordnet ist. Der erste Knotenpunkt 31 ist mit einem ersten Anschluss 51 der Primärseite des Transformators 50 verbunden, und der zweite Knotenpunkt 32 ist mit einem zweiten Primäranschluss 52 des Transformators 50 verbunden.

Analog umfasst die zweite Vollbrücke 42 die vier Schaltelemente S5 bis S8. Das Schaltelement S5 ist auf der einen Seite mit einem dritten Knotenpunkt 41 verbunden, auf der anderen Seite mit dem ersten Sekundäranschluss 21 elektrisch gekoppelt. Das Schaltelement S6 ist zwischen dem dritten Knotenpunkt 41 und dem zweiten Sekundäranschluss 22 angeordnet. Das Schaltelement S7 ist zwischen einem vierten Knotenpunkt 42 und dem ersten Sekundäranschluss 21 angeordnet und das Schaltelement S6 ist zwischen dem vierten Knotenpunkt 42 und dem zweiten Sekundäranschluss 22 angeordnet. Zwischen einem Verbindungspunkt, an dem das Schaltelement S5 und das Schaltelement S7 miteinander verbunden sind und dem ersten Sekundäranschluss 22 kann eine Serieninduktivität 60 vorgesehen sein. Der dritte Knotenpunkt 41 ist mit einem ersten Anschluss 53 der Sekundärseite des Transformators 50 verbunden, und der vierte Knotenpunkt 42 ist mit einem zweiten Sekundäranschluss 54 des Transformators 50 verbunden.

Schließlich ist eine Steuervorrichtung (nicht dargestellt) vorgesehen, welche die Schaltelemente S1 bis S4 der ersten Vollbrücke und die Schaltelemente S5 bis S8 der zweiten Vollbrücke in geeigneter Weise ansteuert. Nachfolgend wird insbesondere eine Schaltfolge für eine elektrische Energieübertragung von der Sekundärseite zur Primärseite des Gleichspannung Wandlers ein näher erläutert, wie sie beispielsweise durch die Steuervorrichtung erfolgen kann.

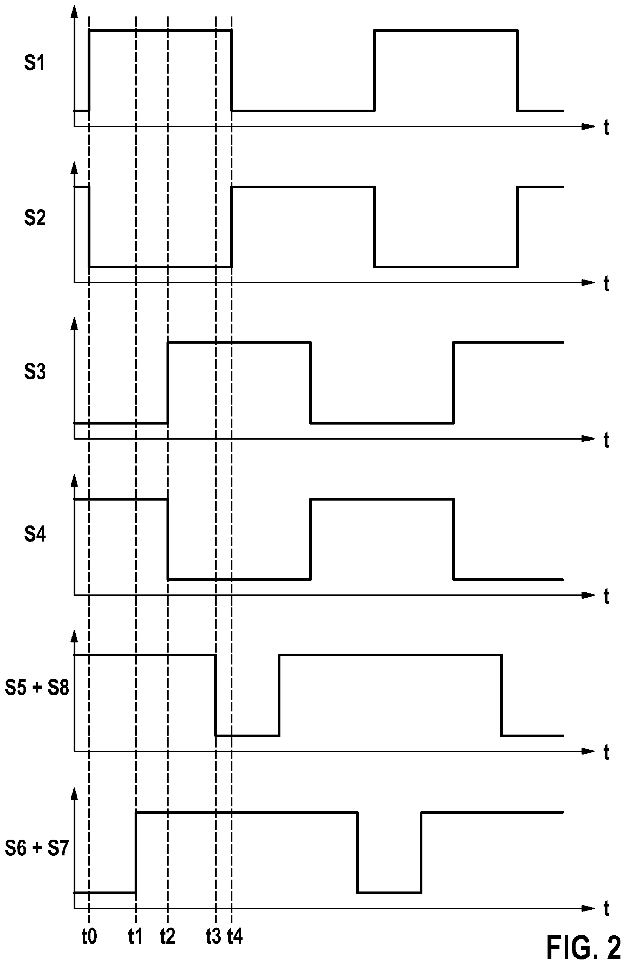

In Figur 2 ist ein Timing-Diagramm für die Schaltzustände der Schaltelemente S1 bis S8 der Vollbrücken 30 und 40 dargestellt, wie sie während einer Energieübertragung von der Sekundärseite zur Primärseite des Gleichspannungswandlers 1 vorgesehen sein können.

Zum Zeitpunkt t0 werden in der ersten Vollbrücke 20 auf der Primärseite in einem Diagonalzweig das erste Schaltelement S1 sowie das vierte Schaltelement S4 angesteuert, so dass diese Schaltelemente leitend werden. Die Schaltelemente im anderen Diagonalzweig aus dem zweiten und dritten Schaltelement S2 und S3 dagegen sind geöffnet. Weiterhin sind die Schaltelemente S5 und S8 in einem Diagonalzweig der zweiten Vollbrücke 40 leitend, und die Schaltelemente S6 und S7 im anderen Diagonalzweig sind geöffnet. Auf diese Weise wird zwischen t0 und t1 elektrische Leistung von der Sekundärseite auf die Primärseite des Gleichspannungswandlers übertragen. Zum Zeitpunkt t1 werden die beiden verbleibenden sekundärseitigen Schalter S6 und S8 ebenfalls angesteuert und somit leitend, so dass alle vier sekundärseitigen Schalter S5 bis S8 geschlossen sind. Somit sinkt der Transformatorstrom durch die primärseitige Spannung, die über der Streuinduktivität des Transformators 50 anliegt, sehr schnell ab und wird negativ. Zum Zeitpunkt t2 schaltet das vierte Schaltelement S4 aus und das dritte Schaltelement S3 wird angesteuert und somit leitend. Der Transformatorstrom muss daher zum Zeitpunkt t2 negativ sein, um ein weiches Einschalten des dritten Schaltelements S3 zu erreichen. Um den Blindstrom zwischen dem Zeitpunkt t2 und t3 zu verringern, wird daher ein kleiner Betrag für den Transformatorstrom zum Zeitpunkt t2 bevorzugt.

In diesem besonderen Schaltzustand zwischen t2 und t3 sind somit auf der Primärseite das erste Schaltelement S1 und das dritte Schaltelement S3 leitend, wodurch der erste Anschluss 51 und der zweite Anschluss 52 auf der Primärseite des Transformators 50 elektrisch miteinander verbunden sind. Auf der Sekundärseite sind alle vier Schaltelemente S5 bis S8 der zweiten Vollbrücke 40 aktiv angesteuert und somit leitend. Somit sind auf der Sekundärseite die Anschlüsse 53, 54 des Sekundäranschlusses des Transformators elektrisch miteinander verbunden, und die Anschlüsse 21, 22 auf der Sekundärseite des Gleichspannungswandlers 1 sind - über die Serieninduktivität 60 - ebenfalls elektrisch miteinander verbunden.

Zwischen dem Zeitpunkt t2 und t3 klingt der Transformatorstrom aufgrund der Widerstände im Transformator 50 und den Schaltelementen in den Vollbrücken weiter ab. Dies führt dazu, dass der Strom durch die sekundärseitige Induktivität 60 gleichmäßig von allen vier sekundärseitigen Schaltelementen S5 bis S8 in der zweiten Vollbrücke 40 geleitet wird. Entsprechend können durch die Absenkung des Blindstroms in dieser Phase die Verluste in allen Schaltern und in dem Transformator 50 gesenkt werden.

Zum Zeitpunkt t3 werden die Schaltelemente S5 und S8 in der zweiten Vollbrücke 40 geöffnet. Der Strom durch die sekundärseitige Induktivität 60 muss somit wieder vollständig vom Transformator 50 geführt werden. Durch die Streuinduktivität des Transformators 50 ergibt sich daher zum Zeitpunkt t3 eine Überspannung über den sekundärseitigen Schaltern. Durch die typischerweise geringe Streuinduktivität der Transformatoren in Phase-Shifted-Full-Bridge-Gleichspannungswandlern und gegebenenfalls vorhandenen Snubber-Netzwerken über den sekundärseitigen Schaltern beeinträchtigt die entstehende Überspannung den Betrieb bis zu hohen Leistungsübertragungen in Rückwärtsrichtung nicht. Bis zum Zeitpunkt t4 wird der Strom über den ersten und dritten Schaltelementen S1 und S3 im "Freilauf" geleitet, so dass weiterhin zumindest annähernd eine Spannung von etwa 0 Volt über den sekundärseitigen Schaltern anliegt. Da die Verluste in den Schaltern und dem Transformator 50 zwischen t3 und t4 ohne Leistungsübertragung deutlich erhöht sind, wird dieser Zeitraum vorzugsweise möglichst kurz gewählt werden.

Zum Zeitpunkt t4 schaltet das erste Schaltelement S1 aus und das zweite Schaltelement S2 wird eingeschaltet. Der zuvor beschriebene Schaltvorgang erfolgt durch den negativen Transformatorstrom wiederum weichschaltend, so dass für alle primärseitigen Schaltvorgänge ebenfalls ein weiches Einschalten erreicht wird. Zum Zeitpunkt t4 beginnt mit der Leistungsübertragung von der Sekundärseite auf die Primärseite die zweite Hälfte einer Periode, die symmetrisch analog zu der zuvor beschriebenen ersten Hälfte der Periode verläuft.

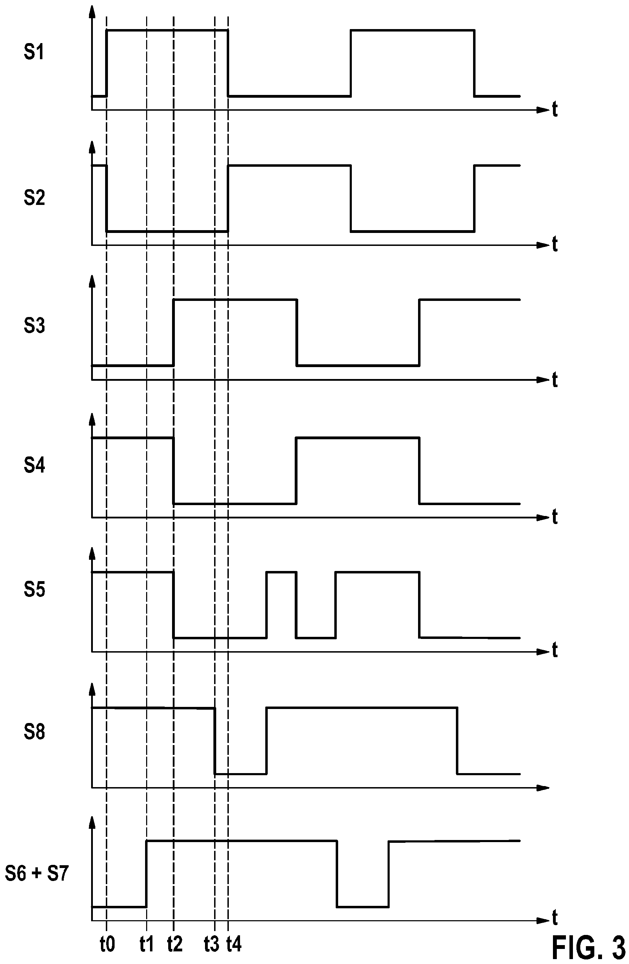

Figur 3 zeigt ein Diagramm für eine Schaltabfolge zur Ansteuerung eines Gleichspannungskonverters für eine Energieübertragung von der Sekundärseite zur Primärseite gemäß einem weiteren Ausführungsbeispiel. Die Schaltfolge gemäß diesem Ausführungsbeispiel unterscheidet sich von der zuvor beschriebenen Schaltungsabfolge insbesondere dadurch, dass zwischen dem Zeitpunkt t2 und t3 (und analog in der zweiten Hälfte der Periode) jeweils nur drei Schaltelemente der vier Schaltelemente S5 bis S8 der zweiten Vollbrücke 40 eingeschaltet sind. Eines der Schaltelemente S5 bis S8 der sekundärseitigen Vollbrücke 40 ist dabei geöffnet. In Figur 3 ist dies beispielsweise das Schaltelement S5. Darüber hinaus gelten die zuvor im Zusammenhang mit Figur 2 gemachten Ausführungen.

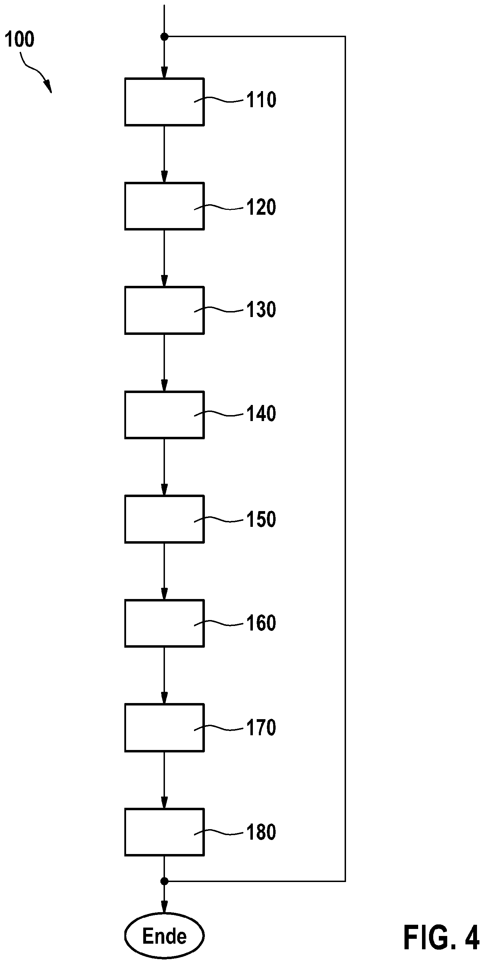

Figur 4 zeigt ein Ablaufdiagramm, wie es einem Verfahren 100 zur Ansteuerung eines Gleichspannungswandlers 1 gemäß einer Ausführungsform zugrunde liegt. Insbesondere kann das Verfahren die zuvor im Zusammenhang mit Figur 1 bis Figur 3 beschriebenen Abläufe umfassen.

Zum Zeitpunkt t0 kann in einem Schritt 110 ein erster Anschluss 53 der Sekundärseite des Transformators 50 mit einem ersten Anschluss 22 der Sekundärseite des Gleichspannungswandlers verbunden sein. Weiterhin ist ein zweiter Anschluss 54 der Sekundärseite des Transformators 50 mit einem zweiten Anschluss 22 der Sekundärseite des Gleichspannungswandlers 1 verbunden. Darüber hinaus wird ein erster Anschluss 51 der Primärseite des Transformators 50 mit einem ersten Anschluss 11 der Primärseite des Gleichspannungswandlers 1 verbunden, und ein zweiter Anschluss 52 der Primärseite des Transformators 50 ist mit einem zweiten Anschluss 12 der Primärseite des Gleichspannungswandlers 1 verbunden.

Zum Zeitpunkt t1 wird in einem zweiten Schritt 120 der erste Anschluss 53 der Sekundärseite des Transformators 50, der zweite Anschluss 54 der Sekundärseite des Transformators 50, der erste Anschluss 21 der Sekundärseite des Gleichspannungswandlers und der zweite Anschluss 22 der Sekundärseite des Gleichspannungswandlers miteinander verbunden. Mit anderen Worten, es erfolgt somit eine elektrische Verbindung der sekundärseitigen Anschlüsse 53, 54 des Transformators 50 und - über die Serieninduktivität 60 - der sekundärseitigen Gleichspannungswandleranschlüsse 21, 22.

Daraufhin erfolgt zum Zeitpunkt t2 in Schritt 130 ein Trennen der Verbindung zwischen dem zweiten Anschluss 52 der Primärseite des Transformators 50 und dem zweiten Anschluss 12 der Primärseite des Gleichspannungswandlers 1. Weiterhin erfolgt in Schritt 130 ein Verbinden des zweiten Anschlusses 52 der Primärseite des Transformators 50 mit dem ersten Anschluss 11 der Primärseite des Gleichspannungswandlers 1.

Schließlich erfolgt zum Zeitpunkt t3 in Schritt 140 das Trennen der Verbindung zwischen dem ersten Anschluss 53 der Sekundärseite des Transformators 50 und dem zweiten Anschluss 54 der Sekundärseite des Transformators 50, sowie das Trennen der Verbindung zwischen dem ersten Anschluss 21 der Sekundärseite des Gleichspannungswandlers 1 und dem zweiten Anschluss 22 der Sekundärseite des Gleichspannungswandlers 1. Ferner erfolgt in diesem Schritt 140 eine Verbindung zwischen dem zweiten Anschluss 22 der Sekundärseite des Gleichspannungswandlers 1 und dem ersten Anschluss 53 der Sekundärseite des Transformators 50.

Durch die Schritte 110 bis 140 erfolgt somit die erste Hälfte einer Leistungsübertragung von der Sekundärseite zur Primärseite des Gleichspannungswandlers 1. Daraufhin können durch die Schritte 150 bis 180 die zweite Hälfte einer Periode zur Leistungsübertragung von der Sekundärseite zur Primärseite ausgeführt werden. Die Schritte 150 bis 180 befolgen dabei ein analoges Schaltmuster zu den Schritten 110 bis 140 mit umgekehrtem Stromfluss durch den Transformator 50.

Zusammenfassend betrifft die vorliegende Erfindung eine Leistungsübertragung in einem Gleichspannungswandler, insbesondere einem Phase-Shifted-Full-Bridge-Gleichspannungswandler von der Sekundärseite zur Primärseite. Hierbei ist insbesondere ein zusätzlicher Schaltzustand vorgesehen, welcher die Verlustleistung der Schaltelemente in dem Gleichspannungswandler verringern kann.

## Patentansprüche

1. Verfahren (100) zur Ansteuerung eines Phase-Shifted-Full-Bridge-Gleichspannungswandlers (1) für eine Energieübertragung von einer Sekundärseite, aufweisend einen ersten Sekundäranschluss (21) und einen zweiten Sekundäranschluss (22), zu einer Primärseite, aufweisend einen ersten Primäranschluss (11) und einen zweiten Primäranschluss (12), des Gleichspannungswandlers (1),
wobei zwischen der Primärseite und der Sekundärseite des Gleichspannungswandlers (1) ein Transformator (50) mit einer Primärseite und einer Sekundärseite angeordnet ist,
wobei der Transformator (50) auf seiner Primärseite einen ersten Primäranschluss (51) und einen zweiten Primäranschluss (52) aufweist und mit einer ersten Vollbrücke (30) verbunden ist,
wobei die erste Vollbrücke (30) vier Schaltelemente (S1-S4) umfasst,
und wobei der Transformator (50) auf seiner Sekundärseite einen ersten Sekundäranschluss (53) und einen zweiten Sekundäranschluss (54) aufweist und mit einer zweiten Vollbrücke (40) verbunden ist,
wobei die zweite Vollbrücke (40) vier Schaltelemente (S5-S8) umfasst,
wobei ein erster Knotenpunkt (31) der ersten Vollbrücke (30) mit dem ersten Primäranschluss (51) des Transformators (50) verbunden und ein zweiter Knotenpunkt (32) der ersten Vollbrücke (30) mit dem zweiten Primäranschluss (52) des Transformators verbunden ist,
wobei ein fünftes Schaltelement (S5) zwischen einem ersten Sekundäranschuss (21) und einem dritten Knotenpunkt (41) angeordnet ist,
wobei ein sechstes Schaltelement (S6) zwischen dem dritten Knotenpunkt (41) und einem zweiten Sekundäranschuss (22) angeordnet ist,
wobei ein siebtes Schaltelement (S7) zwischen dem ersten Sekundäranschuss (21) und einem vierten Knotenpunkt (42) angeordnet ist,
wobei ein achtes Schaltelement (S8) zwischen dem vierten Knotenpunkt (42) und dem zweiten Sekundäranschuss (22) angeordnet ist,
wobei zwischen dem ersten Sekundäranschluss (21) und einem Verbindungspunkt des fünften Schaltelements (S5) und des siebten Schaltelements (S7) eine Serieninduktivität (60) angeordnet ist, und
wobei das Verfahren (100) einen Schaltzustand umfasst, bei welchem die Anschlüsse (51, 52) der Primärseite des Transformators (50) elektrisch miteinander verbunden sind, und bei welchem die Anschlüsse (53, 54) der Sekundärseite des Transformators (50) und die Anschlüsse (21, 22) der Sekundärseite des Phase-Shifted-Full-Bridge-Gleichspannungswandlers *(1) **über die Serieninduktivität (60)*** elektrisch miteinander verbunden sind,
**dadurch gekennzeichnet, dass**
das Verfahren (100) die folgenden Schritte als eine Abfolge von Schaltzuständen umfasst:
- Verbinden (110) des ersten Anschlusses (53) der Sekundärseite des Transformators (50) mit dem ersten Anschluss (21) der Sekundärseite des Gleichspannungswandlers (1), Verbinden des zweiten Anschlusses (54) der Sekundärseite des Transformators (50) mit dem zweiten Anschluss (22) der Sekundärseite des Gleichspannungswandlers (1), Verbinden des ersten Anschlusses (51) der Primärseite des Transformators (50) mit dem ersten Anschluss (11) der Primärseite des Gleichspannungswandlers (1) und Verbinden des zweiten Anschlusses (52) der Primärseite des Transformators (50) mit dem zweiten Anschluss (12) der Primärseite des Gleichspannungswandlers (1);
- Verbinden (120), mittels aktiver Ansteuerung aller vier Schaltelemente (S5-S8) der zweiten Volbrücke (40), des ersten Anschlusses (53) der Sekundärseite des Transformators (50), des zweiten Anschlusses der Sekundärseite (54) des Transformators (50), des ersten Anschlusses (21) der Sekundärseite des Gleichspannungswandlers (1) und des zweiten Anschlusses (22) der Sekundärseite des Gleichspannungswandlers (1);
- Trennen (130) der Verbindung zwischen dem zweiten Anschluss (52) der Primärseite des Transformators (50) und dem zweiten Anschluss (12) der Primärseite des Gleichspannungswandlers (1), und Verbinden des zweiten Anschlusses (52) der Primärseite des Transformators (50) mit dem ersten Anschluss (11) der Primärseite des Gleichspannungswandlers (1);
- Trennen (140) der Verbindung zwischen dem ersten Anschluss (53) der Sekundärseite des Transformators (50) und dem zweiten Anschluss (54) der Sekundärseite des Transformators (50), und der Verbindung zwischen dem ersten Anschluss (21) der Sekundärseite des Gleichspannungswandlers (1) und dem zweiten Anschluss (22) der Sekundärseite des Gleichspannungswandlers (1), und Bereitstellen einer elektrischen Verbindung zwischen dem ersten Anschluss (21) der Sekundärseite des Gleichspannungswandlers (1) und dem zweiten Anschluss (54) der Sekundärseite des Transformators (50) sowie dem zweiten Anschluss (22) der Sekundärseite des Gleichspannungswandlers (1) und dem ersten Anschluss (53) der Sekundärseite des Transformators (50).

2. Verfahren (100) nach Anspruch 1, wobei eine elektrische Spannung (U_prim) an der Primärseite des Gleichspannungswandlers (1) größer ist als das Produkt aus einer elektrischen Spannung (U_sek) an der Sekundärseite des Gleichspannungswandlers (1) multipliziert mit einem Übersetzungsverhältnis des Transformators (50).

3. Verfahren (100) nach Anspruch 1 oder 2, wobei das Verfahren (100) ferner die folgenden Schritte umfasst:
- Verbinden (150) des zweiten Anschlusses (54) der Sekundärseite des Transformators (50) mit dem ersten Anschluss (21) der Sekundärseite des Gleichspannungswandlers (1), Verbinden des ersten Anschlusses (53) der Sekundärseite des Transformators (50) mit dem zweiten Anschluss der Sekundärseite (22) des Gleichspannungswandlers (1), Verbinden des zweiten Anschlusses (52) der Primärseite des Transformators (50) mit dem ersten Anschluss (11) der Primärseite des Gleichspannungswandlers (1) und Verbinden des ersten Anschlusses (51) der Primärseite des Transformators (50) mit dem zweiten Anschluss (12) der Primärseite des Gleichspannungswandlers (1);
- Verbinden (160) des ersten Anschlusses der Sekundärseite (53) des Transformators (50), des zweiten Anschlusses (54) der Sekundärseite des Transformators (50), des ersten Anschlusses (21) der Sekundärseite des Gleichspannungswandlers (1) und des zweiten Anschlusses (22) der Sekundärseite des Gleichspannungswandlers (1);
- Trennen (170) der Verbindung zwischen dem ersten Anschluss (51) der Primärseite des Transformators (50) und dem ersten Anschluss (11) der Primärseite des Gleichspannungswandlers (1), und Verbinden des ersten Anschlusses (51) der Primärseite des Transformators (50) mit dem zweiten Anschluss (12) der Primärseite des Gleichspannungswandlers (1);
- Trennen (180) der Verbindung zwischen dem ersten Anschluss (53) der Sekundärseite des Transformators (50) und dem zweiten Anschluss (54) der Sekundärseite des Transformators (50), und Trennen der Verbindung zwischen dem zweiten Anschluss (22) der Sekundärseite des Gleichspannungswandlers (1) und dem ersten Anschluss (21) der Sekundärseite des Gleichspannungswandlers (1), und Bereitstellen einer elektrischen Verbindung zwischen dem zweiten Anschluss (22) der Sekundärseite des Gleichspannungswandlers (1) und dem ersten Anschluss (53) der Sekundärseite des Transformators (50) sowie dem ersten Anschluss (21) der Sekundärseite des Gleichspannungswandlers (1) und dem zweiten Anschluss (54) der Sekundärseite des Transformators (50).

4. Phase-Shifted-Full-Bridge-Gleichspannungswandler (1), mit
einem Transformator (50) mit einer Primärseite und einer Sekundärseite;
einem ersten Schaltelement (S1), das zwischen einem ersten Primäranschluss (11) und einem ersten Knotenpunkt (31) angeordnet ist,
einem zweiten Schaltelement (S2), das zwischen dem ersten Knotenpunkt (31) und einem zweiten Primäranschluss (12) angeordnet ist,
einem dritten Schaltelement (S3), das zwischen dem ersten Primäranschluss (11) und einem zweiten Knotenpunkt (32) angeordnet ist,
einem vierten Schaltelement (S4), das zwischen dem zweiten Knotenpunkt (32) und dem zweiten Primäranschluss (12) angeordnet ist,
wobei der erste Knotenpunkt (31) mit einem ersten Primäranschluss (51) des Transformators (50) verbunden ist, und der zweite Knotenpunkt (32) mit einem zweiten Primäranschluss (12) des Transformators (50) verbunden ist;
einem fünften Schaltelement (S5), das zwischen einem ersten Sekundäranschuss (21) und einem dritten Knotenpunkt (41) angeordnet ist,
einem sechsten Schaltelement (S6), das zwischen dem dritten Knotenpunkt (41) und einem zweiten Sekundäranschuss (22) angeordnet ist,
einem siebten Schaltelement (S7), das zwischen dem ersten Sekundäranschuss (21) und einem vierten Knotenpunkt (42) angeordnet ist,
einem achten Schaltelement (S8), das zwischen dem vierten Knotenpunkt (42) und dem zweiten Sekundäranschuss (22) angeordnet ist,
***wobei zwischen dem ersten Sekundäranschluss (21) und einem Verbindungspunkt des fünften Schaltelements (S5) und des siebten Schaltelements (S7) eine Serieninduktivität (60) angeordnet ist,***
wobei der dritte Knotenpunkt (41) mit einem ersten Sekundäranschuss (53) des Transformators (50) verbunden ist, und der vierte Knotenpunkt (42) mit einem zweiten Sekundäranschuss (54) des Transformators (50) verbunden ist;
einer Steuervorrichtung, die dazu ausgelegt ist, das erste bis achte Schaltelement (S1 bis S8) gemäß dem Verfahren nach einem der Ansprüche 1 bis 3 anzusteuern.

5. Gleichspannungswandler (1) nach Anspruch 4, wobei der Transformator (50) eine geringe Streuinduktivität aufweist.

## Claims

1. Method (100) for controlling a phase-shifted full-bridge DC-DC converter (1) for an energy transmission from a secondary side, having a first secondary terminal (21) and a second secondary terminal (22), to a primary side, having a first primary terminal (11) and a second primary terminal (12), of the DC-DC converter (1),
wherein a transformer (50) having a primary side and a secondary side is arranged between the primary side and the secondary side of the DC-DC converter (1),
wherein the transformer (50) has, on its primary side, a first primary terminal (51) and a second primary terminal (52), and is connected to a first full-bridge (30),
wherein the first full-bridge (30) comprises four switching elements (S1-S4), and wherein the transformer (50) has, on its secondary side, a first secondary terminal (53) and a second secondary terminal (54), and is connected to a second full-bridge (40),
wherein the second full-bridge (40) comprises four switching elements (S5-S8), wherein a first node (31) of the first full-bridge (30) is connected to the first primary terminal (51) of the transformer (50), and a second node (32) of the first full-bridge (30) is connected to the second primary terminal (52) of the transformer,
wherein a fifth switching element (S5) is arranged between a first secondary terminal (21) and a third node (41),
wherein a sixth switching element (S6) is arranged between the third node (41) and a second secondary terminal (22),
wherein a seventh switching element (S7) is arranged between the first secondary terminal (21) and a fourth node (42),
wherein an eighth switching element (S8) is arranged between the fourth node (42) and the second secondary terminal (22),
wherein a series inductance (60) is arranged between the first secondary terminal (21) and a connecting point between the fifth switching element (S5) and the seventh switching element (S7),
and
wherein the method (100) comprises a switching state, in which the terminals (51, 52) of the primary side of the transformer (50) are electrically connected to one another, and in which the terminals (53, 54) of the secondary side of the transformer (50) and the terminals (21, 22) of the secondary side of the phase-shifted full-bridge DC-DC converter (1) are electrically connected to one another **via the *series inductance (60),* characterized in that**
the method (100) comprises the following steps as a sequence of switching states:
- connecting (110) the first terminal (53) of the secondary side of the transformer (50) to the first terminal (21) of the secondary side of the DC-DC converter (1), connecting the second terminal (54) of the secondary side of the transformer (50) to the second terminal (22) of the secondary side of the DC-DC converter (1), connecting the first terminal (51) of the primary side of the transformer (50) to the first terminal (11) of the primary side of the DC-DC converter (1), and connecting the second terminal (52) of the primary side of the transformer (50) to the second terminal (12) of the primary side of the DC-DC converter (1) ;
- connecting (120), by means of active control of all four switching elements (S5-S8) of the second full-bridge (40), the first terminal (53) of the secondary side of the transformer (50), the second terminal of the secondary side (54) of the transformer (50), the first terminal (21) of the secondary side of the DC-DC converter (1) and the second terminal (22) of the secondary side of the DC-DC converter (1);
- disconnecting (130) the connection between the second terminal (52) of the primary side of the transformer (50) and the second terminal (12) of the primary side of the DC-DC converter (1), and connecting the second terminal (52) of the primary side of the transformer (50) to the first terminal (11) of the primary side of the DC-DC converter (1);
- disconnecting (140) the connection between the first terminal (53) of the secondary side of the transformer (50) and the second terminal (54) of the secondary side of the transformer (50) and the connection between the first terminal (21) of the secondary side of the DC-DC converter (1) and the second terminal (22) of the secondary side of the DC-DC converter (1), and providing an electrical connection between the first terminal (21) of the secondary side of the DC-DC converter (1) and the second terminal (54) of the secondary side of the transformer (50) as well as between the second terminal (22) of the secondary side of the DC-DC converter (1) and the first terminal (53) of the secondary side of the transformer (50).

2. Method (100) according to Claim 1, wherein a voltage (U_prim) at the primary side of the DC-DC converter (1) is greater than the product of a voltage (U_sek) at the secondary side of the DC-DC converter (1) multiplied by a transformation ratio of the transformer (50).

3. Method (100) according to Claim 1 or 2, wherein the method (100) further comprises the following steps:
- connecting (150) the second terminal (54) of the secondary side of the transformer (50) to the first terminal (21) of the secondary side of the DC-DC converter (1), connecting the first terminal (53) of the secondary side of the transformer (50) to the second terminal of the secondary side (22) of the DC-DC converter (1), connecting the second terminal (52) of the primary side of the transformer (50) to the first terminal (11) of the primary side of the DC-DC converter (1), and connecting the first terminal (51) of the primary side of the transformer (50) to the second terminal (12) of the primary side of the DC-DC converter (1) ;
- connecting (160) the first terminal of the secondary side (53) of the transformer (50), the second terminal (54) of the secondary side of the transformer (50), the first terminal (21) of the secondary side of the DC-DC converter (1) and the second terminal (22) of the secondary side of the DC-DC converter (1);
- disconnecting (170) the connection between the first terminal (51) of the primary side of the transformer (50) and the first terminal (11) of the primary side of the DC-DC converter (1), and connecting the first terminal (51) of the primary side of the transformer (50) to the second terminal (12) of the primary side of the DC-DC converter (1);
- disconnecting (180) the connection between the first terminal (53) of the secondary side of the transformer (50) and the second terminal (54) of the secondary side of the transformer (50), and disconnecting the connection between the second terminal (22) of the secondary side of the DC-DC converter (1) and the first terminal (21) of the secondary side of the DC-DC converter (1), and providing an electrical connection between the second terminal (22) of the secondary side of the DC-DC converter (1) and the first terminal (53) of the secondary side of the transformer (50) as well as between the first terminal (21) of the secondary side of the DC-DC converter (1) and the second terminal (54) of the secondary side of the transformer (50).

4. Phase-shifted full-bridge DC-DC converter (1), comprising
a transformer (50) having a primary side and a secondary side;
a first switching element (S1), which is arranged between a first primary terminal (11) and a first node (31),
a second switching element (S2), which is arranged between the first node (31) and a second primary terminal (12),
a third switching element (S3), which is arranged between the first primary terminal (11) and a second node (32), a fourth switching element (S4), which is arranged between the second node (32) and the second primary terminal (12),
wherein the first node (31) is connected to a first primary terminal (51) of the transformer (50), and the second node (32) is connected to a second primary terminal (12) of the transformer (50);
a fifth switching element (S5), which is arranged between a first secondary terminal (21) and a third node (41),
a sixth switching element (S6), which is arranged between the third node (41) and a second secondary terminal (22), a seventh switching element (S7), which is arranged between the first secondary terminal (21) and a fourth node (42),
an eighth switching element (S8), which is arranged between the fourth node (42) and the second secondary terminal (22),
**wherein a *series inductance (60) is arranged* between the *first secondary terminal* (21) and a connecting *point* between *the fifth switching element (S5)* and the *seventh switching element (S7),***
wherein the third node (41) is connected to a first secondary terminal (53) of the transformer (50), and the fourth node (42) is connected to a second secondary terminal (54) of the transformer (50);
a control device, which is designed to control the first to eighth switching elements (S1 to S8) in accordance with the method according to one of Claims 1 to 3.

5. DC-DC converter (1) according to Claim 4, wherein the transformer (50) has a low leakage inductance.

## Revendications

1. Procédé (100) permettant de piloter un convertisseur CC/CC (1) à pont complet déphasé pour une transmission d'énergie d'un côté secondaire présentant une première borne secondaire (21) et une deuxième borne secondaire (22) à un côté primaire présentant une première borne primaire (11) et une deuxième borne primaire (12) du convertisseur CC/CC (1),
dans lequel un transformateur (50) pourvu d'un côté primaire et d'un côté secondaire est disposé entre le côté primaire et le côté secondaire du convertisseur CC/CC (1),
dans lequel le transformateur (50) présente sur son côté primaire une première borne primaire (51) et une deuxième borne primaire (52) et est relié à un premier pont complet (30),
dans lequel le premier pont complet (30) comprend quatre éléments de commutation (S1 à S4), et dans lequel le transformateur (50) présente sur son côté secondaire une première borne secondaire (53) et une deuxième borne secondaire (54) et est relié à un deuxième pont complet (40),
dans lequel le deuxième pont complet (40) comprend quatre éléments de commutation (S5 à S8), dans lequel un premier noeud (31) du premier pont complet (30) est relié à la première borne primaire (51) du transformateur (50), et un deuxième noeud (32) du premier pont complet (30) est relié à la deuxième borne primaire (52) du transformateur,
dans lequel un cinquième élément de commutation (S5) est disposé entre une première borne secondaire (21) et un troisième noeud (41),
dans lequel un sixième élément de commutation (S6) est disposé entre le troisième noeud (41) et une deuxième borne secondaire (22),
dans lequel un septième élément de commutation (S7) est disposé entre la première borne secondaire (21) et un quatrième noeud (42),
dans lequel un huitième élément de commutation (S8) est disposé entre le quatrième noeud (42) et la deuxième borne secondaire (22),
dans lequel une inductance en série (60) est disposée entre la première borne secondaire (21) et un point de liaison du cinquième élément de commutation (S5) et le septième élément de commutation (S7),
et
dans lequel le procédé (100) comprend un état de commutation dans lequel les bornes (51, 52) du côté primaire du transformateur (50) sont reliés électriquement les unes aux autres, et dans lequel les bornes (53, 54) du côté secondaire du transformateur (50) et les bornes (21, 22) du côté secondaire du convertisseur CC/CC (1) à pont complet déphasé sont reliées électriquement les unes aux autres **par l'intermédiaire de l'inductance en *série (60),* caractérisé en ce que**
le procédé (100) comprend les étapes suivantes sous la forme d'une séquence d'états de commutation :
- relier (110) la première borne (53) du côté secondaire du transformateur (50) à la première borne (21) du côté secondaire du convertisseur CC/CC (1), relier la deuxième borne (54) du côté secondaire du transformateur (50) à la deuxième borne (22) du côté secondaire du convertisseur CC/CC (1), relier la première borne (51) du côté primaire du transformateur (50) à la première borne (11) du côté primaire du convertisseur CC/CC (1), et relier la deuxième borne (52) du côté primaire du transformateur (50) à la deuxième borne (12) du côté primaire du convertisseur CC/CC (1) ;
- relier (120), au moyen d'un pilotage actif de l'ensemble des quatre éléments de commutation (S5 à S8) du deuxième pont complet (40), la première borne (53) du côté secondaire du transformateur (50), la deuxième borne du côté secondaire (54) du transformateur (50), la première borne (21) du côté secondaire du convertisseur CC/CC (1) et la deuxième borne (22) du côté secondaire du convertisseur CC/CC (1) ;
- déconnecter (130) la liaison entre la deuxième borne (52) du côté primaire du transformateur (50) et la deuxième borne (12) du côté primaire du convertisseur CC/CC (1), et relier la deuxième borne (52) du côté primaire du transformateur (50) à la première borne (11) du côté primaire du convertisseur CC/CC (1) ;
- déconnecter (140) la liaison entre la première borne (53) du côté secondaire du transformateur (50) et la deuxième borne (54) du côté secondaire du transformateur (50), et la liaison entre la première borne (21) du côté secondaire du convertisseur CC/CC (1) et la deuxième borne (22) du côté secondaire du convertisseur CC/CC (1), et fournir une liaison électrique entre la première borne (21) du côté secondaire du convertisseur CC/CC (1) et la deuxième borne (54) du côté secondaire du transformateur (50) ainsi qu'entre la deuxième borne (22) du côté secondaire du convertisseur CC/CC (1) et la première borne (53) du côté secondaire du transformateur (50).

2. Procédé (100) selon la revendication 1, dans lequel une tension électrique (U_prim) du côté primaire du convertisseur CC/CC (1) est supérieure au produit d'une tension électrique (U_sek) du côté secondaire du convertisseur CC/CC (1) multipliée par un rapport de transmission du transformateur (50).

3. Procédé (100) selon la revendication 1 ou 2, dans lequel le procédé (100) comprend en outre les étapes suivantes consistant à :
- relier (150) la deuxième borne (54) du côté secondaire du transformateur (50) à la première borne (21) du côté secondaire du convertisseur CC/CC (1), relier la première borne (53) du côté secondaire du transformateur (50) à la deuxième borne du côté secondaire (22) du convertisseur CC/CC (1), relier la deuxième borne (52) du côté primaire du transformateur (50) à la première borne (11) du côté primaire du convertisseur CC/CC (1), et relier la première borne (51) du côté primaire du transformateur (50) à la deuxième borne (12) du côté primaire du convertisseur CC/CC (1) ;
- relier (160) la première borne du côté secondaire (53) du transformateur (50), la deuxième borne (54) du côté secondaire du transformateur (50), la première borne (21) du côté secondaire du convertisseur CC/CC (1) et la deuxième borne (22) du côté secondaire du convertisseur CC/CC (1) ;
- déconnecter (170) la liaison entre la première borne (51) du côté primaire du transformateur (50) et la première borne (11) du côté primaire du convertisseur CC/CC (1), et relier la première borne (51) du côté primaire du transformateur (50) à la deuxième borne (12) du côté primaire du convertisseur CC/CC (1) ;
- déconnecter (180) la liaison entre la première borne (53) du côté secondaire du transformateur (50) et la deuxième borne (54) du côté secondaire du transformateur (50), et déconnecter la liaison entre la deuxième borne (22) du côté secondaire du convertisseur CC/CC (1) et la première borne (21) du côté secondaire du convertisseur CC/CC (1), et fournir une liaison électrique entre la deuxième borne (22) du côté secondaire du convertisseur CC/CC (1) et la première borne (53) du côté secondaire du transformateur (50) ainsi qu'entre la première borne (21) du côté secondaire du convertisseur CC/CC (1) et la deuxième borne (54) du côté secondaire du transformateur (50) .

4. Convertisseur CC/CC (1) à pont complet déphasé, comprenant
un transformateur (50) pourvu d'un côté primaire et d'un côté secondaire ;
un premier élément de commutation (S1) qui est disposé entre une première borne primaire (11) et un premier noeud (31),
un deuxième élément de commutation (S2) qui est disposé entre le premier noeud (31) et une deuxième borne primaire (12),
un troisième élément de commutation (S3) qui est disposé entre la première borne primaire (11) et un deuxième noeud (32),
un quatrième élément de commutation (S4) qui est disposé entre le deuxième noeud (32) et la deuxième borne primaire (12),
dans lequel le premier noeud (31) est relié à une première borne primaire (51) du transformateur (50), et le deuxième noeud (32) est relié à une deuxième borne primaire (12) du transformateur (50) ;
un cinquième élément de commutation (S5) qui est disposé entre une première borne secondaire (21) et un troisième noeud (41),
un sixième élément de commutation (S6) qui est disposé entre le troisième noeud (41) et une deuxième borne secondaire (22),
un septième élément de commutation (S7) qui est disposé entre la première borne secondaire (21) et un quatrième noeud (42),
un huitième élément de commutation (S8) qui est disposé entre le quatrième noeud (42) et la deuxième borne secondaire (22),
***dans* lequel une inductance en *série (60) est disposée* entre *la première borne secondaire (21)* et un *point* de *liaison* du cinquième élément de *commutation (S5)* et le *septième* élément de *commutation (S7),***
dans lequel le troisième noeud (41) est relié à une première borne secondaire (53) du transformateur (50), et le quatrième noeud (42) est relié à une deuxième borne secondaire (54) du transformateur (50) ;
un dispositif de commande qui est conçu pour piloter les premier à huitième éléments de commutation (S1 à S8) selon le procédé selon l'une quelconque des revendications 1 à 3.

5. Convertisseur CC/CC (1) selon la revendication 4, dans lequel le transformateur (50) présente une faible inductance de fuite.
